# EUROPEAN PATENT SPECIFICATION

(11) **EP 1 670 564 B1**
(45) Date of publication and mention of the grant of the patent: **28.11.2007**
(21) Application number: 04743536.7
(22) Date of filing: 23.07.2004
(51) Int. Cl.: B01D 45/16, B04C 3/04, F02M 35/022

(54) **SEPARATOR SYSTEMS**
TRENNVORRICHTUNGEN
SYSTEMES SEPARATEURS

(30) Priority: 04.08.2003 GB 0318241
(43) Date of publication of application: 21.06.2006
(73) Proprietor: PALL CORPORATION, East Hills, New York 11548 (US)
(72) Inventor: BULA, Eric, Fareham, Hampshire PO15 6PR (GB); SIMPSON, Steve, Ringwood, Hampshire BH24 1SG (GB); STAMP, Jeff, Emsworth, Portsmouth PO10 7LF (GB)
(74) Representative: Knott, Stephen Gilbert
(86) International application number: PCT/GB2004/003204
(87) International publication number: WO 2005/016490

(56) References cited:
- EP-A- 0 019 057
- DE-A- 19 951 312
- FR-A- 1 063 400
- GB-A- 2 324 484
- US-A- 1 735 298
- US-A- 3 915 679

## Description

The invention relates to separator systems and, more particularly, separator systems for use with engines.

Engines, whether gas turbine engines, petrol engines or diesel engines, require combustion air which is normally delivered to the engine through an inlet. It is important for such inlet air to be relatively free of particulates since, if fed to the engine, particulates can have a damaging effect on the engine. It is customary therefore, to position a barrier filter in the inlet to remove particulates from the air. Barrier filters are, however, only satisfactory where the volume of particulates is not great. In environments where the volume of particulates is significant, barrier filters will clog quickly and thus need replacement at short intervals which is unsatisfactory.

It is known to use inertial separators to remove particulates in such hostile environments where air contains high volumes of particulates. An example of this is shown in GB-A-2324484. Each separator comprises a tubular body containing a vortex generator and leading to an outlet member. A gap between an exit to the tubular body and the outlet allows particulates spun to the internal surface of the body to exit the separator.

A plurality of such separators are mounted side by side in a housing with their ends in register. A scavenge flow is passed through the housing to remove particulates exiting the separators. As seen in GB-A-2324484, it is known to provide two such stages arranged in succession in the flow path of the particulate-laden inlet air to increase removal efficiency.

The presence of inertial separators in the path of an air flow produces a significant pressure drop in the flow. For this reason, it has not previously been possible to achieve required particulate removal efficiencies using only inertial separators. In general, it has been necessary to limit the number of inertial separator stages used and obtain required removal rates by the use of a downstream barrier filter.

According to a first aspect of the invention, there is provided a separator system for separating particulates from air flowing in a path comprising three or more separator stages arranged in succession in the direction of flow of air in said path, each stage including a respective housing containing a plurality of side-by-side inertial separators through which said air flows each inertial separator including a vortex generator formed by a helical vane, the additional total pressure drop produced by each separator stage after the first separator stage being less than the additional total pressure drop produced by the preceding separator stage in an upstream direction, and the total pressure drop across the first, second and third separator stages being less than 1.5 times the total pressure drop across the first and second separator stages each housing being connected to a supply of scavenge air and to an outlet for scavenge air for removing particulates from the housing.

According to a second aspect of the invention, there is provided an air intake for an engine including a separator system according to the first aspect of the invention.

According to a third aspect of the invention, there is provided an engine including an air intake according to the second aspect of the invention.

The following is a more detailed description of an embodiment of the invention, by way of example, reference being made to the accompanying drawings in which:-
Figure 1 is a schematic perspective view of a separator system including three separator stages,
Figure 2 is a longitudinal cross section of part of one stage of the separator system of Figure 1, and
Figure 3 is a schematic perspective view of an air intake of the kind shown in Figures 1 and 2 acting as an air intake for internal combustion engine including a turbocharger.

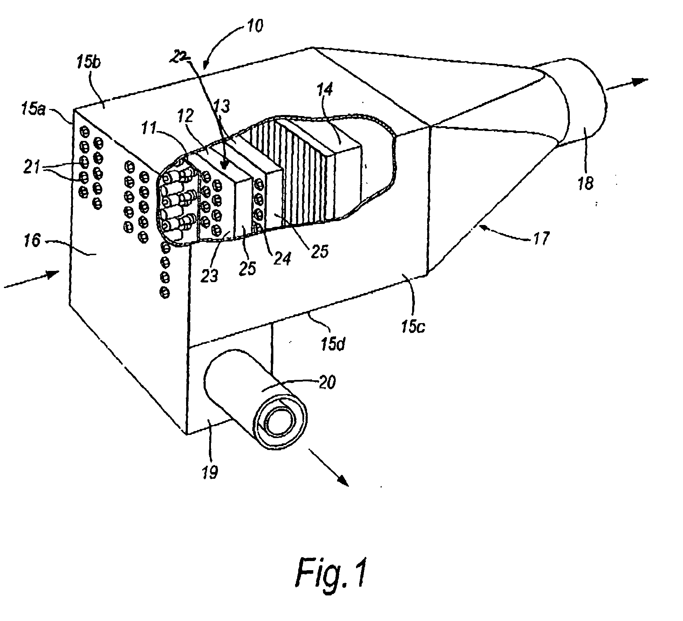

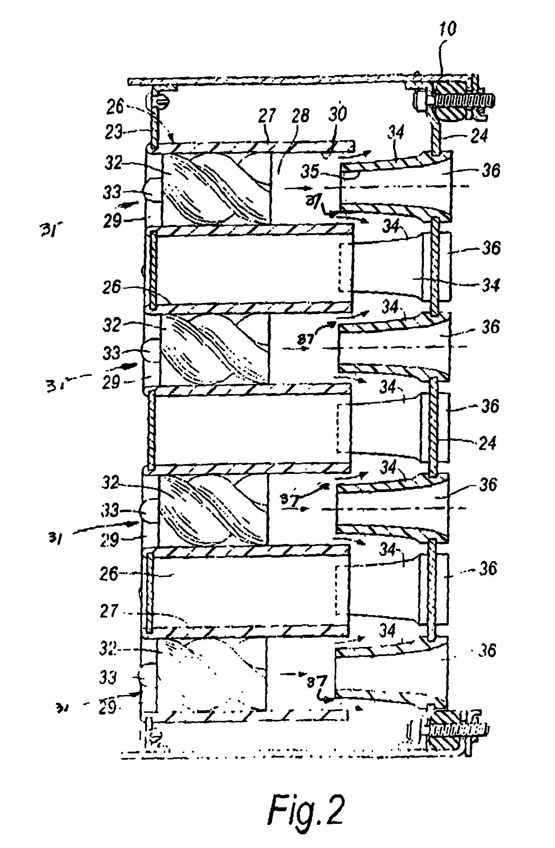

Referring first to Figures 1 and 2, the separator system comprises a housing 10 containing three separator stages 11, 12, 13 and a barrier filter 14.

The housing 10, which may be made of metal, comprises a duct formed by four generally rectangular walls 15a, 15b, 15c and 15d with an inlet wall 16 at one end and a converging outlet duct 17 at the other end ending in a cylindrical or equivalent area outlet 18. A scavenge plenum 19 communicates with the interior of the housing through one of the walls 15d and includes a scavenge outlet 20. Another wall includes a scavenge air inlet (not shown).

The inlet wall is provided with inlet apertures 21 and, as indicated by the arrows, air enters the housing 10 through the air inlet apertures 21, passes through the interior of the housing and leaves through the outlet duct 17 and the outlet 18.

The separator stages 11, 12, 13 share common features. These common features will now be described with reference to the first separator stage 11 as seen in Figure 2 but it will be understood that corresponding features are found in the second stage 12 and the third stage 13.

The first separator stage 11 comprises a housing 22 formed by a front panel 23 and a parallel rear panel 24. The front and rear panels 23 24 are interconnected by side walls 25. A plurality of inertial separators 26 extend between the front panel 23 and the rear panel 24. Each inertial separator 26 that is of generally known type as shown, for example, in GB-A-1207028. Such an inertial separator comprises a tubular body 27 having a central passage 28, an inlet 29 and an outlet 30 A vortex generator 31 is disposed within the central passage 28. The vortex generator 31 may be made of any suitable materials such as plastics or metal and moulded or bonded in position in the passage 28. The vortex generator 31 has helical vanes 32 surrounding a cylindrical hub 33. The body 27, the vortex generator 31 and the hub 33 may be moulded as a single item.

A tubular outlet member 34 has an inlet 35 and an outlet 36 and diverges from the inlet 35 to the outlet 36. The outlet member 34 is coaxial with the passage 28 and has the inlet 35 extending into the outlet end 30 of the passage 28. The outer diameter of the inlet 25 of the outlet member 34 is less than the inner diameter of the passage outlet 30. There is thus an annular space 37 formed between the outlet 30 of the passage 28 and the outer surface of the inlet 35 of the outlet member 34.

Each inertial separator 26 is mounted between the front panel 23 and the rear panel 24 with the passage inlet 29 in register with the corresponding inlet in the front panel and with the outlet 36 of the outlet member 34 in register with an outlet in the rear panel 24. The space 37 communicates with the interior of the housing 22.

The interior of each housing 22 of the separator stages 11, 12, 13 is connected to a supply of scavenge air (not shown). The supply includes a manifold (not shown) which receives air and distributes the scavenge air to the housing 22 of the three separator stages 11, 12, 13. The air passes through the housing 22 and then leaves the housing 22 to pass into the scavenge plenum 19 and then to the scavenge outlet 20.

The barrier filter 14 is arranged in the housing 10 downstream of the third separator stage 13. The barrier filter 14 is of known type and may be a flat panel filter, or a circular cartridge type element or a bi-pleat type element.

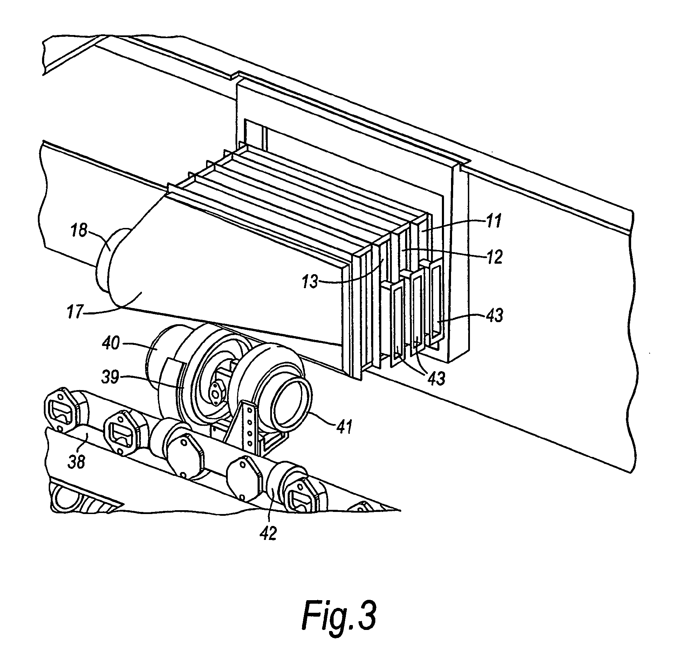

Referring to Figure 3, in which parts common to Figures 1 and 2 and to Figure 3 are given the same reference numerals and are not described in detail, there is shown a separator system of the general type described above with reference to Figures 1 to 2 installed as an air intake for an internal combustion engine 38 including a turbo charger 39. In this embodiment, the outlet duct 17 extends at an acute angle relative to the path of flow of air through the separator stages 11, 12, 13 and the barrier filter 40. The outlet 18 to the outlet duct 17 is connected to an inlet 40 to the turbo charger 39. There is an uninterrupted flow path between this outlet 18 and the turbo charger inlet 14 with, for example, no filter in this path. An outlet 41 to the turbo charger 39 is connected to an air inlet 42 of the engine 38. Figure 3 also shows three scavenge air inlets 43 each communicating with a respective separator stage 11, 12, 13. The scavenge air supply system is not shown in this Figure.

The arrangement of the separator system described above with reference to the drawings is for removing particulates from air supplied to the engine 38. It removes more than 99.5% and preferably more than 99.7% of all particles having a size greater than 5 microns and preferably a size greater than 2 microns. It may achieve this in an environment where the requirement for air by the engine may be in excess of 85m³/min and where the weight of particulates removed may be in excess of 8kg/hr.

The separator system described above with reference to the drawings achieves this by use of the first second and third separator stages 11, 12, 13 alone. Although the barrier filter 14 is present, it is effective only when there is a failure of one or more of the separator stages 11, 12, 13 by failure of the scavenge system.

While it is in principle possible to achieve very high particulate removal rates with inertial separators, they suffer from the disadvantage that, as particulate removal efficiencies increase there is an increased pressure drop across each separator stage. This means that, previously, it has not been possible to provide particulate removal rates of 99.7% and better solely by the use of separator stages. Historically, it has been necessary to use no more than two separator stages - bearing in mind that the pressure drops are cumulative - and also to use a downstream barrier filter to achieve required removal efficiencies.

In the separator system described above with reference to the drawings, the required efficiency of particulate removal is achieved solely by the use of separator stages with, in the present case, three stages being provided. This is achieved by ensuring that each stage after the first adds a pressure drop to the overall pressure drop that is less than the preceding stage. Thus the cumulative pressure drop across the first and second stages is less than twice the pressure drop across the first stage alone and the cumulative pressure drop across the first, second and third stages is less than 1.5 times the cumulative pressure drop across the first and second stages. For example, the first stage may have a pressure drop of 12mb (1.2 kPa), the second stage may add 10mb (1 kPa) and the third stage may add 8mb (0.8 kPa). This is achieved in the following ways.

First, the pitch of the vanes 32 of the vortex generators 31 in the first separator stage 11 is greater than the pitch of the vanes 32 of the vortex generators 31 of the second separator stage 12 which in turn is greater than the pitch of the vanes 32 in the vortex generators 31 of the third separator stage 13. For example, the pitch in the first separator stage 11 may be 48mm in the second stage 38mm and in the third stage 33mm. Thus the cumulative pressure drop across each separator stage increases in a downstream direction. The effect of this is that the pressure drop is lowest across the first separator stage 11 where the majority of the particulate material is removed. For example, the first separator stage may remove 97.5% of particulates. In the second stage 12, where the pressure drop across the first and second stages 11, 12 is higher, this efficiency may increase to 98.5% to 99%. In the third separator stage 13, where the pressure drop across the first, second and third stages 11, 12, 13 is highest, the final removal efficiency is greater than 99.5% and preferably greater than 99.7% is achieved.

In addition, the volume of scavenge air passed through each housing 22 decreases between the separator stages 11, 12, 13 in a downstream direction. For example, the scavenge flow in the first separator stage may be 15% of the main flow in the second separator stage 12, 10% of the main flow and in the third separator stage 13, 5% of the main flow. Thus, the inlet will draw in 130% of the required engine inlet flow. The effect of increasing the scavenge flow is to increase the efficiency of scavenge removal and also to increase the cumulative pressure drop.

Further, the number of inertial separators 26 varies between the three stages. There are most inertial separators 26 in the first separator stage 11, less in the second separator stage 12 and least in the third separator stage 13. For example, each stage may have, in relation to the succeeding stage in a downstream direction, between 5% and 30% more inertial separators. In one embodiment, there may be 120 inertial separators 26 in the first separator stage 11, 110 inertial separators 26 in the second separator stage 12 and 100 inertial separators 26 in the third separator stage 13.

The spacing between the first separator stage 11, the second separator stage 12, the third separator stage 13 and the barrier filter 14 is also adjusted to optimise the removal efficiency and control the pressure drop between the separator stages 11, 12, 13. For example, the separation between the first separator stage 11 and the second separator stage 12 may be less than the separation between the second separator stage 12 and the third separator stage 13. The barrier filter 14 may be separated from the third separator stage 13 by a multiple of the distance between the second separator stage 12 and the third separator stage 13. Separation between the separator stages 11, 12, 13 may vary between 6mm and 100mm. The distance between the third separator stage 13 and the barrier filter 14 will depend on the installation space envelope, the barrier filter configuration and internal airflow dynamics. Similar considerations will govern the spacing between the barrier filter 14 and the entrance to the outlet ducts 17.

In use, inlet air is fed to the housing 10. A proportion of the inlet air is bled and sent to the scavenge manifold (not shown). The remaining air enters the housing through the inlet wall 16 and passes through the inertial separator 26 in the first separator 11. The air will be carrying particulate materials such as dust and other debris including grit sand and stones. Each vortex generator 31 of each inertial separator 26 of the first stage 11 generates a vortex that forces the particulate material to the periphery of the associated passage 28, so leaving the air at the centre relatively clean. The portion of the airflow at the periphery, which is carrying the particulate material, exits through the annular space 37 into the associated housing 22. The central core of clean air passes through the outlet member 34 into the space between the first separator stage 11 and the second separator stage 12. The particulate material that passes through the annular space 37 into the housing 22 is removed by the scavenge air to the scavenge plenum 19 and passed to the scavenge outlet 20.

A similar process takes place in the second separator stage 12 and the third separator stage 13.

As mentioned above, the barrier filter 14 is present only for emergency use and so, when all three separator stages 11, 12, 13 are functioning, it will extract only minimal particulate material from the air exiting the third separator stage 13. The relatively clean air, which may, as described above, have 99.5% or preferably 99.7% of all particulate material having a size greater than 5 microns and preferably greater than 2 microns removed from the air, then passes through the outlet duct 17. In the embodiment shown in Figure 3, this air then passes direct to the turbo charger 39 and then to the engine 38.

In this way, particulate removal is achieved without the need for a barrier filter. Thus, the separator unit has a long life since there are no parts which, under normal circumstances, require regular removal. The barrier filter 14 only requires removal and replacement if the scavenge system is not functioning properly.

There are a number of alterations which may be made to the separator system described above with reference to the drawings. For example, although three separators stages 11, 12, 13 are shown, there may be two separator stages or four or more separator stages. In all cases, the arrangement will be such that each stage after the first adds a pressure drop to the overall pressure drop that is less than the preceding stage.

While the separator system described above with reference to the drawings achieves such a change in pressure drop by altering the helix pitch on the vanes 32, by adjusting the scavenge flow, by adjusting the numbers of inertial separators in each stage and by adjusting the spacing, it will be appreciated these features may be used separately or two or more of them may be used together.

## Claims

1. A separator system for separating particulates from air flowing in a path comprising three or more separator stages (11, 12, 13) arranged in succession in the direction of flow of air in said path, each stage (11, 12, 13) including a respective housing, (22) containing a plurality of side-by-side inertial separators (26) through which said air flows each inertial separator including a vortex generator (31) formed by a helical vane (32), the additional total pressure drop produced by each separator stage after the first separator stage (12, 13) being less than the additional total pressure drop produced by the preceding separator stage (11) in an upstream direction, and the total pressure drop across the first, second and third separator stages (11, 12, 13) being less than 1.5 times the total pressure drop across the first and second separator stages (11, 12) each housing (22) being connected to a supply of scavenge air and to an outlet (20) for scavenge air for removing particulates from the housing (22).

2. A separator according to claim 1 and comprising a fourth separator stage downstream of the third separator stage (13) in the direction of flow of air in said path the total pressure drop across the first, second, third and fourth (11, 12, 13) separator stages being less than 1.33 times the total pressure drop across the first, second and third (11, 12, 13) separator stages.

3. A separators system according to claim 1 or claim 2 wherein the pitch of each vane (32) of an upstream stage being greater than the pitch of each vane (32) of a downstream stage.

4. A separator system according to claim 3 wherein the vane pitch is between 45mm and 33mm.

5. A separator system according to any one of claims 1 to 4 wherein the volume of scavenge air flow supplied to each housing decreases in a downstream direction.

6. A separator system according to claim 5 wherein the scavenge air flow decreases by equal amounts between stages (11, 12, 13).

7. A separator system according to any one of claims 1 to 6 wherein each stage (11, 12, 13) includes a different number of inertial separators (26), the number of inertial separators (26) in each stage decreasing in a downstream direction.

8. A separator system according to claim 7 wherein each stage has, in relation to the succeeding stage in a downstream direction, between 5% and 30% less inertial separators.

9. A separator system according to any one of claims 1 to 8 wherein an uninterrupted flow path is provided between successive stages (11, 12, 13).

10. A separator system according to any one of claims 1 to 9, wherein the spacing between the stages is equal.

11. A separator system according to any one of claims 1 to 10, wherein the spacing between the separator stages is not equal.

12. A separator system according to claim 11 wherein the spacing between separator stages (11, 12, 13) increases in a downstream direction.

13. A separator system according to any one of claims 10 to 12 wherein the spacing between adjacent separator stages (11, 12, 13) is between 6mm and 100mm.

14. A separator system according to any one of claim 1 to 13 wherein a barrier filter (14) is provided downstream of the last stage in the direction of flow of said air in said path.

15. A separator system according to claim 14 wherein the barrier filter (14) is formed by a depth filter media.

16. A separator system according to any one of claim 1 to 15 wherein the system removes at least 99.5% of particulates in said air and preferably at least 99.7% of said particulates.

17. An air intake for an engine including a separator system according to any one of claim 1 to 16.

18. An engine including an air intake according to claim 17.

19. An engine according to claim 18 and including a turbocharger between the air intake and the engine, air flowing from the turbo charger to the engine in an uninterrupted path.

## Patentansprüche

1. Abscheidevorrichtung zum Abscheiden von teilchenförmigem Material von einem einen Strömungsweg durchströmenden Luftstrom mit drei oder mehr in Strömungsrichtung der Luft in diesem Strömungsweg nacheinander angeordneten Abscheidestufen (11, 12, 13), wobei jede Stufe (11, 12, 13) ein Gehäuse (22) hat, das mehrere nebeneinander angeordnete Trägheitsabscheider (26) enthält, durch welche die Luft strömt, wobei jeder Trägheitsabscheider einen Wirbelgenerator (31) beinhaltet, der von einer schraubenförmigen Leitfläche (32) gebildet wird, wobei der von jeder Abscheidestufe nach der ersten Abscheidestufe (12, 13) erzeugte zusätzliche Gesamtdruckabfall geringer ist als der von der stromauf vorhergehenden Abscheidestufe (11) erzeugte zusätzliche Gesamtdruckabfall und der Gesamtdruckabfall über die erste, zweite und dritte Abscheidestufe (11, 12, 13) weniger als 1,5 Mal der Gesamtdruckabfall Ober die erste und zweite Abscheidestufe (11, 12) ist, wobei jedes Gehäuse (22) mit einer Spülluftzufuhr und mit einem Spülluftauslass (20) zur Entfernung von teilchenförmigem Material aus dem Gehäuse (22) versehen ist.

2. Abscheider nach Anspruch 1, eine vierte Abscheidestufe stromabwärts der dritten Abscheidestufe (13) in Strömungsrichtung der Luft in dem Strömungsweg umfassend, wobei der Gesamtdruckabfall über die erste, zweite, dritte und vierte Abscheidestufe (11, 12, 13) weniger als 1,33 Mal der Gesamtdruckabfall über die erste, zweite und dritte Abscheidestufe (11, 12, 13) ist.

3. Abscheidevorrichtung nach Anspruch 1 oder 2, wobei die Steigung jeder Leitfläche (32) einer stromauf angeordneten Stufe größer als die Steigung jeder Leitfläche (32) einer stromab angeordneten Stufe ist.

4. Abscheidevorrichtung nach Anspruch 3, wobei die Steigung der Leitfläche zwischen 45 mm und 33 mm beträgt.

5. Abscheidevorrichtung nach einem der Ansprüche 1 bis 4, wobei das Volumen der jedem Gehäuse zugeführten Spülluft in Richtung stromab abnimmt.

6. Abscheidevorrichtung nach Anspruch 5, wobei der Strom der Spülluft zwischen den Stufen (11, 12, 13) um gleiche Mengen abnimmt.

7. Abscheidevorrichtung nach einem der Ansprüche 1 bis 6, wobei jede Stufe (11, 12, 13) eine andere Anzahl von Trägheitsabscheidern (26) aufweist, wobei die Anzahl der Trägheitsabscheider (26) in jeder Stufe in Richtung stromab abnimmt.

8. Abscheidevorrichtung nach Anspruch 7, wobei jede Stufe im Verhältnis zur folgenden Stufe in Richtung stromab zwischen 5 % und 30 % weniger Trägheitsabscheider hat.

9. Abscheidevorrichtung nach einem der Ansprüche 1 bis 8, wobei ein durchgehender Strömungsweg zwischen aufeinanderfolgenden Stufen (11, 12, 13) vorgesehen ist.

10. Abscheidevorrichtung nach einem der Ansprüche 1 bis 9, wobei der Abstand zwischen den Stufen gleich ist.

11. Abscheidevorrichtung nach einem der Ansprüche 1 bis 10, wobei der Anstand zwischen der Abscheidestufen nicht gleich ist.

12. Abscheidevorrichtung nach Anspruch 11, wobei der Anstand zwischen den Abscheidestufen (11, 12, 13) in Richtung stromab zunimmt

13. Abscheidevorrichtung nach einem der Ansprüche 10 bis 12, wobei der Abstand zwischen benachbarten Abscheidestufen (11, 12, 13) zwischen 6 mm und 100 mm beträgt.

14. Abscheidevorrichtung nach einem der Ansprüche 1 bis 13, wobei ein Sperrfilter (14) stromab der letzten Stufe in Strömungsrichtung der Luft in dem Strömungsweg vorgesehen ist.

15. Abscheidevorrichtung nach Anspruch 14, wobei das Sperrfilter (14) von einem Tiefenfiltermedium gebildet wird.

16. Abscheidevorrichtung nach einem der Ansprüche 1 bis 15, wobei die Vorrichtung mindestens 99,5 % des teilchenförmigen Materials aus der Luft entfernt, vorzugsweise mindestens 99,7 % des teilchenförmigen Materials.

17. Lufteinlasseinrichtung für einen Motor, die eine Abscheidevorrichtung nach einem der Ansprüche 1 bis 16 umfasst.

18. Motor, der eine Lufteinlasseinrichtung nach Anspruch 17 umfasst.

19. Motor nach Anspruch 18 einschließlich eines Turboladers zwischen der Lufteinlasseinrichtung und dem Motor, wobei die Luft in einem durchgehenden Strömungsweg vom Turbolader zum Motor strömt.

## Revendications

1. Système séparateur pour séparer des particules d'un air s'écoulant dans un chemin comprenant trois ou plus étages séparateurs (11, 12, 13) agencés en succession dans la direction de l'écoulement d'air dans ledit chemin, chaque étage (11, 12, 13) comprenant un boîtier (22) respectif contenant une pluralité de séparateurs inertiels côte à côte (26) à travers lesquels ledit air s'écoule chaque séparateur inertiel comprenant un générateur de vortex (31) formé par une ailette hélicoïdale (32), la chute de pression totale additionnelle produite par chaque étage de séparateur après le premier étage de séparateur (12, 13) étant inférieure à la chute de pression totale additionnelle produite par l'étage de séparateur précédent (11) dans la direction de l'amont, et la chute de pression totale à travers les premier, second et troisième étages séparateurs (11, 12, 13) étant inférieure à 1,5 fois la chute de pression totale à travers les premier et second étages séparateurs (11, 12) chaque boîtier étant connecté à une alimentation d'air de balayage et à un orifice de sortie (20) pour l'air de balayage pour enlever des particules du boîtier (22).

2. Séparateur selon la revendication 1 et comprenant un quatrième étage de séparateur en aval du troisième étage de séparateur (13) dans la direction de l'écoulement d'air dans ledit chemin la chute de pression totale à travers les premier, second, troisième et quatrième étages séparateurs (11, 12, 13) étant inférieure à 1,33 fois la chute de pression totale à travers les premier, second et troisième étages séparateurs (11, 12, 13).

3. Séparateur selon la revendication 1 ou 2 dans lequel le pas de chaque ailette (32) d'un étage en amont est plus grand que le pas de chaque ailette (32) d'un étage en aval.

4. Système séparateur selon la revendication 3 dans lequel le pas d'ailette est entre 45 mm et 33 mm.

5. Système séparateur selon l'une quelconque des revendications 1 à 4 dans lequel le volume de l'écoulement d'air de balayage fourni à chaque boîtier diminue dans la direction de l'aval.

6. Système séparateur selon la revendication 5 dans lequel l'écoulement d'air de balayage décroît par quantités égales entre les étages (11, 12, 13).

7. Système séparateur selon l'une quelconque des revendications 1 à 6 dans lequel chaque étage (11, 12, 13) comprend un nombre différent de séparateurs inertiels (26) dans chaque étage diminuant dans la direction de l'aval.

8. Système séparateur selon la revendication 7 dans lequel chaque étage a, par rapport à l'étage suivant dans la direction de l'aval, entre 5% et 30% de moins de séparateurs inertiels.

9. Système séparateur selon l'une quelconque des revendications 1 à 8 dans lequel un chemin d'écoulement ininterrompu est fourni entre les étages successifs (11, 12, 13).

10. Système séparateur selon l'une quelconque des revendications 1 à 9, dans lequel l'espacement entre les étages est égal.

11. Système séparateur selon l'une quelconque des revendications 1 à 10, dans lequel l'espacement entre les étages de séparateur n'est pas égal.

12. Système séparateur selon la revendication 11 dans lequel l'espacement entre les étages séparateurs (11, 12, 13) augmente dans la direction de l'aval.

13. Système séparateur selon l'une quelconque des revendications 10 à 12, dans lequel l'espacement entre des étages séparateurs adjacents (11, 12, 13) est entre 6 mm et 100 mm.

14. Système séparateur selon l'une quelconque des revendications 1 à 13, dans lequel un filtre écran (14) est placé en aval du dernier étage dans le sens de l'écoulement dudit air dans ledit chemin.

15. Système séparateur selon la revendication 14 dans lequel le filtre écran (14) est formé par un support de filtre de profondeur.

16. Système séparateur selon l'une quelconque des revendications 1 à 15, dans lequel le système enlève au moins 99,5% des particules dans ledit air et de préférence au moins 99,7% desdites particules.

17. Entrée d'air pour un moteur comprenant un Système séparateur selon l'une quelconque des revendications 1 à 16.

18. Moteur comprenant une entrée d'air selon la revendication 17.

19. Moteur selon la revendication 18 comprenant un turbocompresseur entre l'entrée d'air et le moteur, l'air s'écoulant du turbocompresseur vers le moteur dans un chemin ininterrompu.
